# EUROPÄISCHE PATENTSCHRIFT

(11) **EP 2 956 683 B1**
(45) Veröffentlichungstag und Bekanntmachung des Hinweises auf die Patenterteilung: **14.12.2016**
(21) Anmeldenummer: 14703841.8
(22) Anmeldetag: 11.02.2014
(51) Int. Cl.: F16C 9/04, F16C 35/077

(54) **KURBELTRIEBANORDNUNG EINES VORZUGSWEISE ÖLFREIEN KOLBENVERDICHTERS**
CRANK SHAFT ASSEMBLY OF A PREFERABLY OIL-FREE PISTON COMPRESSOR
ENTRAÎNEMENT À BIELLE D'UN COMPRESSEUR À PISTONS DE PRÉFÉRENCE SANS HUILE

(30) Priorität: 14.02.2013 DE 102013101498
(43) Veröffentlichungstag der Anmeldung: 23.12.2015
(73) Patentinhaber: KNORR-BREMSE Systeme für Schienenfahrzeuge GmbH, 80809 München (DE)
(72) Erfinder: HARTL, Michael, 82008 Unterhaching (DE); SCHNEIDER, Stefan, 80995 München (DE)
(86) Internationale Anmeldenummer: PCT/EP2014/052595
(87) Internationale Veröffentlichungsnummer: WO 2014/124917

(56) Entgegenhaltungen:
- EP-A1- 1 314 898
- DE-B- 1 013 129
- US-A- 2 652 297
- US-A- 3 443 848

## Beschreibung

Die Erfindung betrifft eine Kurbeltriebanordnung eines Kolbenverdichters, mit einem an einem Kurbelzapfen einer Kurbelwelle angeordneten Wälzlager, an welchem ein Pleuel über einen Zwischenring angebracht ist, der mit Mitteln zur Verdrehsicherung gegenüber dem Pleuel zusammenwirkt. Die Erfindung betrifft ferner auch eine ölfreie Verdichtereinheit zur Erzeugung von Druckluft, welche mit einer derartigen Kurbeltriebanordnung ausgestattet ist.

Das Anwendungsgebiet der Erfindung erstreckt sich vornehmlich auf Druckluftkompressoren im Schienenfahrzeugbau, welche während des Betriebes harten Anforderungen ausgesetzt sind, insbesondere hohen Temperaturschwankungen von minus 50° Celsius bis plus 50° Celsius. Dabei werden hohe Laufzeiten und hohe Einschaltdauern gefahren, so dass die Druckluftkompressoren oftmals an der maximalen Temperaturgrenze der Bauteile betrieben werden. Hinzu kommt, dass Druckluftkompressoren in Schienenfahrzeugen häufig in engen Räumen untergebracht werden müssen, was die Kühlluftzufuhr erschwert. All diese Umgebungsbedingungen begünstigen eine erhebliche Wärmedehnung der Bauteile, welche ganz besonders die sich im Leistungsfluss des Antriebes befindlichen und über formschlüssige Verdrehsicherungen zusammenwirkenden Bauteile belastet.

In der Praxis hat sich gezeigt, dass insbesondere dann derartig hohe Belastungen auf die Verdrehsicherungen wirken, wenn kurzzeitige sogenannte Bügelsprünge, also Stromschienenunterbrechungen, stattfinden, welche dazu führen, dass die Drehzahl des Druckluftkompressors kurzzeitig abfällt, um anschließend schlagartig wieder stark anzusteigen. Insbesondere Verdrehsicherungen im Bereich des Kurbeltriebs eines Kolbenverdichters werden hierdurch stark beansprucht.

Gemäß des allgemein bekannten Standes der Technik werden Pleuel innerhalb einer Kurbeltriebanordnung eines Kolbenverdichters geteilt ausgeführt. Die Montage der Pleuel erfolgt in mehreren Schritten, wobei zunächst die Kurbelwelle mit ihren aufgepressten Kurbelzapfen-Wälzlagern in ein Kurbelgehäuse eingebaut wird. Danach werden die Pleuel durch die Öffnungen im Kurbelgehäuse eingeführt, welche später für die Zylindermontage dienen. Jedes Pleuel und die zugeordnete geteilte kurbelwellenseitige Halbschale werden auf die Wälzlager der Kurbelwelle gefügt. Hierdurch kann eine an dieser Stelle vorzusehende Verdrehsicherung zwischen Pleuel und dem Wälzlager nicht spielfrei ausgeführt sein, dieser muss also mit Spiel in die Fixierung des Wälzlagers der Kurbelwelle gefügt werden.

Bei hohen Temperaturen verliert das Aluminiummaterial des Pleuel gegenüber dem Wälzlager und dem gewöhnlich dazwischen angeordneten Zwischenring aus Stahl, in welches das Wälzlager und Dichtungen eingepresst werden, wegen der unterschiedlichen Wärmeausdehnungen der Bauteile die Presspassung, so dass die formschlüssige Verdrehsicherung bei jedem Komprimieren und Expandieren des Verdichterkolbens belastet wird. Die pulsierende Belastung führt dazu, dass es zu einer ständigen Relativbewegung im Spiel der Verdrehsicherung kommt, welche bei diesem Stand der Technik aus Gründen der Montierbarkeit vorhanden sein muss.

Aus der EP 1 314 898 A1 geht eine Kurbeltriebanordnung, insbesondere für einen Kolbenverdichter, hervor, welche im Wesentlichen aus einer Kurbelwelle mit mindestens einem Kurbelzapfen besteht, an dem über mindestens ein Wälzlager ein Pleuel aus Leichtmetall drehbar befestigt ist, wobei zwischen dem Wälzlager und dem Pleuel ein Zwischenring angeordnet ist, der einerseits über eine Presspassung mit dem Wälzlager drehfest verbunden ist und der andererseits formschlüssig mit dem Pleuel drehfest verbunden ist. Der Zwischenring besteht aus einem Material mit zumindest annähernd gleichem spezifischen Wärmeausdehnungskoeffizienten, wie das Material des Wälzlagers, um bei Temperaturschwankungen ein Lösen des Wälzlagers gegenüber dem Pleuel zu vermeiden. Die formschlüssige Verbindung zwischen Wälzlager und Pleuel ist hierbei über eine Rändelprofilierung oder mindestens einen radial überstehenden Stift realisiert. Der Stift kann dabei als separates Bauteil, als Bestandteil des Pleuels oder Bestandteil des Zwischenrings ausgebildet sein.

In der Praxis hat sich aus fertigungstechnischen Gründen sowie Betriebsgründen gezeigt, dass eine Ausführung der Verdrehsicherung in Form eines separaten Stiftes von Vorteil ist, da dieser wegen der hohen Belastungen aus einem möglichst widerstandsfähigen Material bestehen sollte, wogegen das Pleuel gewöhnlich aus einem leichten Metall hergestellt ist. Wird die einen Stift umfassende Verdrehsicherung aus Stahl hergestellt, muss dieser im Leichtmetallmaterial des Pleuels verankert werden. Ein einfacher Presssitz nach dem Stand der Technik ist jedoch unterschiedlichen Wärmeausdehnungen der Materialien ausgesetzt und neigt daher sich zu lösen, Spiel zu schaffen und/oder auszuschlagen. Ein ausgeschlagener Stift einer Verdrehsicherung kann zu erheblichen Lagerschäden führen.

Es ist daher die Aufgabe der vorliegenden Erfindung, eine Kurbeltriebanordnung eines Kolbenverdichters zu schaffen, deren Mittel zur Verdrehsicherung gegenüber einem Pleuel fertigungstechnisch einfach sowie betriebssicher ausgeführt ist.

Die Aufgabe wird ausgehend von einer Kurbeltriebanordnung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die Mittel zur Verdrehsicherung zwischen Pleuel und Zwischenring eine spielfrei im Pleuel mittels Gewinde befestigte Stiftanordnung umfassen, welche über eine spielbehaftete Passung formschlüssig seitens des Zwischenrings zum Eingriff kommt.

Der Vorteil der erfindungsgemäßen Lösung liegt insbesondere darin, dass einerseits durch die Gewindebefestigung der Verdrehsicherung im Pleuel ein demgegenüber fester Sitz gewährleistet werden kann, wogegen die spielbehaftete Passung im Zusammenwirken mit dem Zwischenring eine einfache Montage gewährleistet.

Gemäß einer bevorzugten Ausführungsform ist die Stiftanordnung zweiteilig ausgeführt und umfasst insoweit einen im Wesentlichen zylinderförmigen Stift mit glatter Mantelfläche, der in eine Buchse eingepresst ist, welche mit dem Außengewinde zum Einschrauben in das Pleuel versehen ist. Mit dieser zweiteiligen Ausführung kann sowohl die Gewindebefestigung gegenüber dem Pleuel als auch die formschlüssige Spielpassung gegenüber dem Zwischenring in fertigungstechnisch einfacher Weise umgesetzt werden.

Um eine feste Verbindung der Stiftanordnung zu schaffen, wird vorgeschlagen, dass der zylinderförmige Stift aus einem vorzugsweise gehärteten und angelassenen Vergütungsstahl besteht, wogegen die Buchse aus einem demgegenüber weicheren vorvergüteten Stahlmaterial besteht. Gemäß einer bevorzugten Ausführungsform sollte der Stift über eine Härte von mindestens 45 HRC (Rockwell) und die Buchse über eine Härte von maximal 45 HRC verfügen.

Ferner wird vorgeschlagen, die über das Außengewinde in das Pleuel eingeschraubte Stiftanordnung zusätzlich mit einem Schraubensicherungsklebemittel zu sichern. Hierdurch wird verhindert, dass sich die Stiftanordnung selbsttätig vom Pleuel lösen kann.

Zur Begrenzung der Einschraubtiefe der Stiftanordnung in das Pleuel wird vorgeschlagen, dass die Buchse optional einen axial an das Außengewinde angrenzenden außenradialen Bund zur Bildung eines Anschlages aufweist. Der Anschlag wird in eine korrespondierende Einsenkung einer Schraubdurchgangsbohrung des Pleuels untergebracht.

Gemäß einer anderen die Erfindung verbessernden Maßnahme wird vorgeschlagen, dass die Buchse an der Stelle, an welcher der Stift aus der Buchse ragt, mit einem Radius versehen ist. Hierdurch werden Kerbspannungen im Stift reduziert, so dass mit dieser einfachen fertigungstechnischen Maßnahme einem Brechen des Stiftes bei hoher Dauerbelastung vorgebeugt wird.

Eine weitere die Festigkeit der erfindungsgemäßen Verdrehsicherung verbessernden Maßnahme besteht darin, dass eine mit dem Stift der Stiftanordnung korrespondierende Grundbohrung seitens des Zwischenrings randschichtig gehärtet ausgeführt ist, wobei die Härte der Randschicht der Härte des Stiftes entspricht. Der Zwischenring sollte insoweit zumindest im Bereich der Grundbohrung entsprechend gehärtet sein. Es ist natürlich auch denkbar, dass der Zwischenring insgesamt aus einem gehärteten Material besteht, welches in etwa der Härte des Stifts entspricht.

Eine hohe Stabilität der Stiftanordnung lässt sich optional dadurch gewährleisten, indem der Teil des Stiftes, welcher in die Buchse eingepresst ist, mindestens so lang ist wie der Teil des Stiftes, welcher aus der Buchse ragt. Hierdurch kann eine günstige Spannungsverteilung innerhalb des Stiftes bei Belastung sichergestellt werden.

Weitere die Erfindung verbessernde Maßnahmen werden nachstehend gemeinsam mit der Beschreibung eines bevorzugten Ausführungsbeispiels der Erfindung anhand der Figuren näher dargestellt.

Es zeigen:
- Figur 1: eine Seitenansicht eines Pleuels einer Kurbeltriebanordnung mit Teilschnitt im Bereich der Verdrehsicherung,
- Figur 2: einen Längsschnitt (Detail X) im Bereich der Verdrehsicherung nach Figur 1,
- Figur 3: einen Längsschnitt einer Stiftanordnung der Verdrehsicherung,
- Figur 4: eine perspektivische Ansicht der Stiftanordnung nach Figur 3.

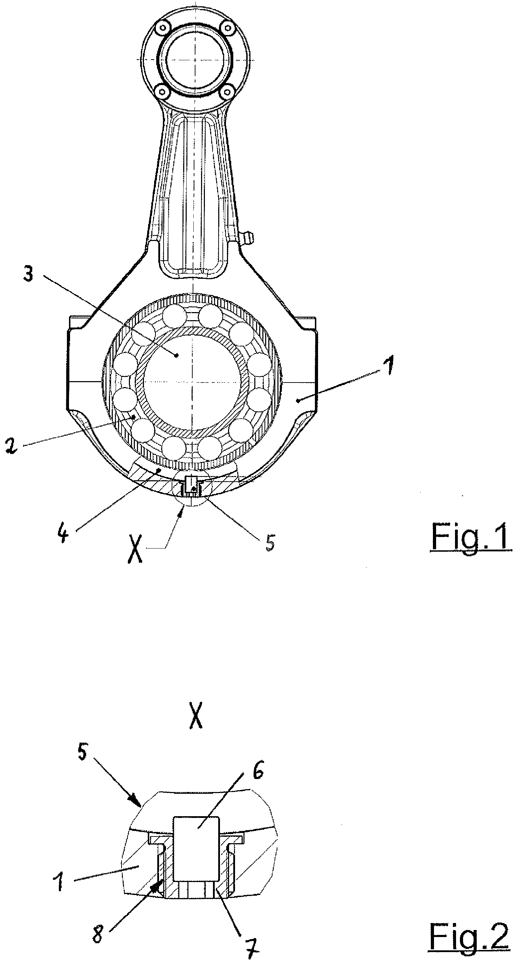

Gemäß Figur 1 ist ein Pleuel 1 einer nicht im Detail dargestellten Kurbeltriebanordnung eines Kolbenverdichters über ein Wälzlager 2 an einen Kurbelzapfen 3 einer Kurbelwelle drehbar angeordnet. Das aus einem Leichtmetall bestehende Pleuel 1 ist über einen aus einem Stahlmaterial hergestellten Zwischenring 4 außen am Wälzlager 2 befestigt, also an dessen ebenfalls aus einem Stahlmaterial hergestellten Lageraußenring. Der Zwischenring 4 wirkt mit Mitteln zur Verdrehsicherung gegenüber dem Pleuel 1 zusammen, welche eine spielfrei im Pleuel 1 mittels Gewinde befestigte Stiftanordnung 5 aufweist, die über eine spielbehaftete Passung formschlüssig in einer korrespondierenden Ausnehmung seitens des Zwischenrings 4 zum Eingriff kommt.

Gemäß dem in Figur 2 dargestellten Detail X im Bereich der Verdrehsicherung ist die Stiftanordnung 5 zweiteilig ausgeführt. Diesbezüglich ist ein zylinderförmiger Stift 6 mit glatter Mantelfläche in eine Buchse 7 eingepresst, welche mit einem Außengewinde 8 zum Einschrauben in das Pleuel 1 versehen ist. Die über das Außengewinde 8 in das Pleuel 1 eingeschraubte Buchse 7 der Stiftanordnung 5 wird mit einem Schraubensicherungsklebemittel gesichert.

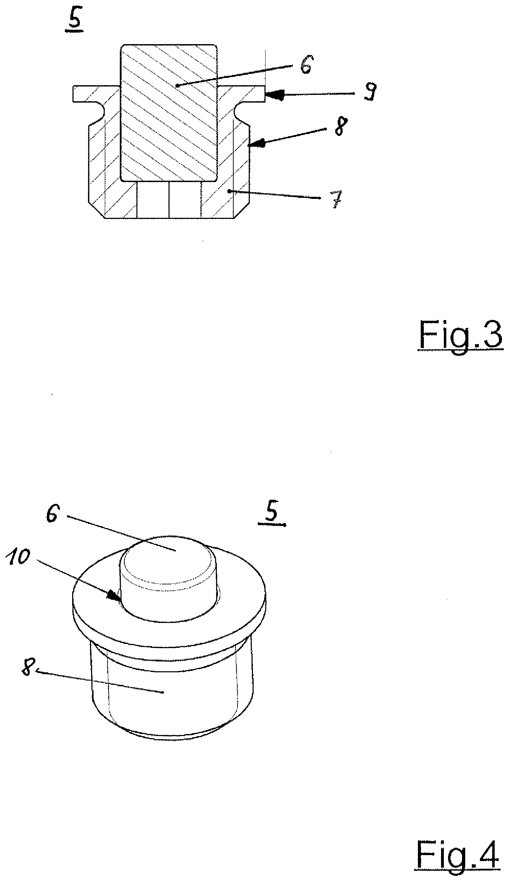

Gemäß Figur 3 weist die Buchse 7 einen axial an das Außengewinde 8 angrenzenden außenradialen Bund 9 auf. Der an die Buchse 7 angeformte Bund 9 bildet einen Anschlag für die Begrenzung der Einschraubtiefe der Buchse 7 in das - nicht weiter dargestellte - Pleuel 1. Der Teil des Stiftes 6, welcher in die Buchse 7 eingepresst ist, ist bei diesem Ausführungsbeispiel länger als der Teil des Stiftes 6, welcher aus der Buchse 7 ragt.

Gemäß Figur 4 ist die Buchse 7 an der Stelle, an welcher der Stift 6 aus der Buchse 7 ragt, mit einem Radius 10 versehen, um Kerbspannungen zu vermeiden.

Die Erfindung ist nicht beschränkt auf das vorstehend beschriebene bevorzugte Ausführungsbeispiel. Es sind auch Abwandlungen hiervon denkbar, welche vom Schutzbereich der nachfolgenden Ansprüche mit umfassend oder im Hinblick hierauf als zumindest naheliegend erscheinen. So ist es beispielsweise auch möglich, die erfindungsgemäße Stiftanordnung direkt mit dem Lageraußenring des Wälzlagers zusammenwirken zu lassen, welcher in diesem Falle an geeigneter Stelle mit einer Grundbohrung auszuführen wäre.

### Bezugszeichenliste

- 1: Pleuel
- 2: Wälzlager
- 3: Kurbelzapfen
- 4: Zwischenring
- 5: Stiftanordnung
- 6: Stift
- 7: Buchse
- 8: Außengewinde
- 9: Bund
- 10: Radius

- X: Detail

## Patentansprüche

1. Kurbeltriebanordnung eines Kolbenverdichters, mit einem an einem Kurbelzapfen (3) einer Kurbelwelle angeordneten Wälzlager (2), an welchem ein Pleuel (1) über einen Zwischenring (4) angebracht ist, der mit Mitteln zur Verdrehsicherung gegenüber dem Pleuel (1) zusammenwirkt,
**dadurch gekennzeichnet, dass** die Mittel zur Verdrehsicherung eine spielfrei im Pleuel (1) mittels Gewinde befestigte Stiftanordnung (5) aufweisen, welche über eine spielbehaftete Passung formschlüssig im Zwischenring (4) zum Eingriff kommt.

2. Kurbeltriebanordnung nach Anspruch 1,
**dadurch gekennzeichnet, dass** die Stiftanordnung (5) zweiteilig ausgeführt ist und einen zylinderförmigen Stift (6) mit glatter Mantelfläche umfasst, der in eine Buchse (7) eingepresst ist, welche mit einem Außengewinde (8) zum Einschrauben in das Pleuel (1) versehen ist.

3. Kurbeltriebanordnung nach Anspruch 2,
**dadurch gekennzeichnet, dass** der zylinderförmige Stift (6) aus einem gehärteten und angelassenen Vergütungsstahl besteht, wogegen die Buchse (7) aus einem demgegenüber weicheren vorvergüteten Stahlmaterial besteht.

4. Kurbeltriebanordnung nach Anspruch 2,
**dadurch gekennzeichnet, dass** die über das Außengewinde (8) in das Pleuel (1) eingeschraubte Stiftanordnung (5) mit einem Schraubensicherungsklebemittel gesichert ist.

5. Kurbeltriebanordnung nach Anspruch 1,
**dadurch gekennzeichnet, dass** die Buchse (7) einen axial an das Außengewinde (8) angrenzenden außenradialen Bund (9) zur Bildung eines Anschlages für die Begrenzung der Einschraubtiefe in das Pleuel (1) aufweist.

6. Kurbeltriebanordnung nach Anspruch 2,
**dadurch gekennzeichnet, dass** die Buchse (7) an der Stelle, an welcher der Stift (6) aus der Buchse (8) ragt, mit einem Radius (10) versehen ist.

7. Kurbeltriebanordnung nach Anspruch 2,
**dadurch gekennzeichnet, dass** der Teil des Stiftes (6), welcher in die Buchse (8) eingepresst ist mindestens so lang ist, wie der Teil des Stiftes (6), welcher aus der Buchse (8) ragt.

8. Kurbeltriebanordnung nach Anspruch 2,
**dadurch gekennzeichnet, dass** eine mit dem Stift (6) der Stiftanordnung (5) korrespondierende Grundbohrung im Zwischenring (4) randschichtgehärtet ist, wobei die Härte der Randschicht der Härte des Stifts (6) entspricht.

9. Kurbeltriebanordnung nach Anspruch 8,
**dadurch gekennzeichnet, dass** der Zwischenring (4) aus einem Stahlmaterial besteht.

10. Ölfreie Verdichtereinheit zur Erzeugung von Druckluft, mit einer Kurbeltriebanordnung nach einem der vorstehenden Ansprüche.

## Claims

1. Crank drive assembly of a piston compressor, comprising an antifriction bearing (2), which is located on a crank pin (3) of a crankshaft and on which a connecting rod (1) is mounted via a spacer ring (4) acting together with means preventing rotation relative to the connecting rod (1),
**characterised in that** the means preventing rotation comprise a pin arrangement (5), which is secured in the connection rod (1) without play by means of a thread and which comes into positive engagement in the spacer ring (4) via a fit subject to play.

2. Crank drive assembly according to claim 1,
**characterised in that** the pin arrangement (5) is designed in two parts and comprises a cylindrical pin (6) with a smooth outer surface, which is pressed into a bushing (7) provided with a male thread (8) for tightening into the connection rod (1).

3. Crank drive assembly according to claim 2,
**characterised in that** the cylindrical pin (6) is made of a hardened and annealed heat-treated steel, whereas the bushing (7) is made of a softer pre-hardened and -tempered steel material.

4. Crank drive assembly according to claim 2,
**characterised in that** the pin arrangement (5) tightened into the connection rod (1) by means of the male thread (8) is secured with a locking adhesive.

5. Crank drive assembly according to claim 1,
**characterised in that** the bushing (7) has an externally radial collar (9) axially adjoining the male thread (8) to provide a stop for limiting the thread engagement length into the connecting rod (1).

6. Crank drive assembly according to claim 2,
**characterised in that** the bushing (7) is provided with a radius (10) at the point where the pin (6) projects from the bushing (7).

7. Crank drive assembly according to claim 2,
**characterised in that** the part of the pin (6) which is pressed into the bushing (7) is at least as long as the part of the pin (6) which projects from the bushing (7).

8. Crank drive assembly according to claim 2,
**characterised in that** a base bore in the spacer ring (4) which corresponds to the pin (6) of the pin arrangement (5) is boundary-hardened, the hardness of the boundary layer corresponding to the hardness of the pin (6).

9. Crank drive assembly according to claim 8,
**characterised in that** the spacer ring (4) consists of a steel material.

10. Oil-free compressor unit for generating compressed air, comprising a crank drive assembly according to any of the preceding claims.

## Revendications

1. Entraînement à manivelle d'un compresseur à piston, comprenant un palier (2) à roulement, qui est monté sur un tourillon (3) d'un arbre de manivelle et sur lequel une bielle (1) est posée par l'intermédiaire d'une bague (4) intermédiaire, qui coopère avec des moyens pour empêcher la torsion par rapport à la bielle (1),
**caractérisé en ce que** les moyens pour empêcher la torsion comportent un agencement (5) de broche, qui est fixé sans jeu dans la bielle au moyen de filetage et qui vient en prise à complémentarité de forme dans la bague (4) intermédiaire par un ajustement ayant du jeu.

2. Entraînement à manivelle suivant la revendication 1,
**caractérisé en ce que** l'agencement (5) de broche est réalisé en deux parties et comprend une broche (6) de forme cylindrique à surface latérale lisse qui est enfoncée dans une douille (7), laquelle est pourvue d'un filetage (8) extérieur pour le vissage dans la bielle (1).

3. Entraînement à manivelle suivant la revendication 2,
**caractérisé en ce que** la broche (6) de forme cylindrique est en un acier revenu de traitement durci et adouci, tandis que la douille (7) et en un matériau d'acier prétraité de manière plus douce.

4. Entraînement à manivelle suivant la revendication 2,
**caractérisé en ce que** l'agencement (5) de broche, vissé dans la bielle (1) par le filetage (8) extérieur, est bloqué par un moyen de collage anti-dévissage.

5. Entraînement à manivelle suivant la revendication 1,
**caractérisé en ce que** la douille (7) a un collet (9) radialement vers l'extérieur, voisin du filetage (8) extérieur pour la formation d'une butée afin de limiter la profondeur de vissage dans la bielle (1).

6. Entraînement à manivelle suivant la revendication 2,
**caractérisé en ce que** la douille (7) a un certain rayon (10) à l'endroit où la broche (6) dépasse de la douille (8).

7. Entraînement à manivelle suivant la revendication 2,
**caractérisé en ce que** la partie de la broche (6), qui est enfoncée dans la douille (8), est au moins aussi longue que la partie de la broche (6) qui dépasse de la douille (8).

8. Entraînement à manivelle suivant la revendication 2,
**caractérisé en ce qu'**un alésage de base, correspondant à la broche (6) de l'agencement (5) de broche, dans la bague (4) intermédiaire est durci par une couche de bord, la dureté de la couche de bord correspondant à la dureté de la broche (6).

9. Entraînement à manivelle suivant la revendication 8,
**caractérisé en ce que** la bague (4) intermédiaire est en un matériau d'acier.

10. Groupe compresseur sans huile, de production d'air comprimé, comprenant un dispositif d'entraînement à manivelle suivant l'une des revendications précédentes.
